# EUROPEAN PATENT APPLICATION

(11) **EP 4 613 972 A1**
(43) Date of publication of application: **10.09.2025**
(21) Application number: 25158101.3
(22) Date of filing: 14.02.2025
(51) Int. Cl.: F01D 5/06, F01D 25/28

(54) **GAS TURBINE ENGINE CONFIGURATION FOR CONTAINMENT TESTING**

(30) Priority: 14.02.2024 US 202418441453
(71) Applicant: PRATT & WHITNEY CANADA CORP., Longueuil, Québec J4G 1A1 (CA)
(72) Inventor: CONCIATORI, Michael, (01BE5) Longueuil, J4G 1A1 (CA)
(74) Representative: Dehns

(57) **Abstract**

A spool (22) of a gas turbine engine (10) includes an outer shaft assembly (40) positioned at and configured to rotate about an engine central longitudinal axis (A). The outer shaft assembly (40) is secured to one or more rotating components of the gas turbine engine (10). The outer shaft assembly (40) includes a first shaft portion (52), and a second shaft portion (54). The first shaft portion (52) axially overlaps the second shaft portion (54) at a shaft joint (56). A centering feature is positioned at the shaft joint (56) and is configured to radially center the second shaft portion (54) relative to the first shaft portion (52). A tie shaft (48) is concentric with and located radially inboard of the outer shaft assembly (40). The tie shaft (48) is configured to apply an axially compressive load on the outer shaft assembly (40).

## Description

### BACKGROUND

Exemplary embodiments of the present disclosure pertain to the art of gas turbine engines.

Gas turbine engines often are dual-spool configurations in which rotating components are mounted to concentric shafts that extend along an engine central longitudinal axis. The rotating components are configured to be enclosed and contained in a nacelle.

The gas turbine engine is required to meet requirements for containment performance of the nacelle in conditions such as separation or decoupling of one or more of the concentric shafts. Due to these requirements, not only must the engine be configured to meet the requirements, but must also be configured such that required testing may be feasibly performed.

### BRIEF DESCRIPTION

In one aspect of the present invention, a spool of a gas turbine engine includes an outer shaft assembly positioned at and configured to rotate about an engine central longitudinal axis. The outer shaft assembly is secured to one or more rotating components of the gas turbine engine. The outer shaft assembly includes a first shaft portion, and a second shaft portion. The first shaft portion axially overlaps the second shaft portion at a shaft joint. A centering feature is positioned at the shaft joint and is configured to radially center the second shaft portion relative to the first shaft portion. A tie shaft is concentric with and located radially inboard of the outer shaft assembly. The tie shaft is configured to apply an axially compressive load on the outer shaft assembly.

In an embodiment of the above, a nut is applied to the tie shaft to apply the compressive load.

In an embodiment according to any of the previous embodiments, the centering feature includes an outer diameter lip of the first shaft portion that axially overlaps the second shaft portion.

In an embodiment according to any of the previous embodiments, the centering feature includes an inner diameter lip of the first shaft portion that axially overlaps the second shaft portion.

In an embodiment according to any of the previous embodiments, the spool is a high pressure spool of a two-spool gas turbine engine.

In an embodiment according to any of the previous embodiments, the spool includes an impeller and a turbine. The impeller is positioned at the first shaft portion and the turbine is positioned at the second shaft portion.

In an embodiment according to any of the previous embodiments, the tie shaft is continuous and unbroken along an axial length of the outer shaft assembly.

In another aspect of the present invention, a gas turbine engine includes a combustor, and at least one spool. The at least one spool includes a turbine configured to be driven by products of the combustor and a compressor operably connected to and driven by rotation of the turbine. The spool further includes an outer shaft assembly including a first shaft portion connected to the compressor and a second shaft portion connected to the turbine. The first shaft portion axially overlaps the second shaft portion at a shaft joint. A centering feature is positioned at the shaft joint and is configured to radially center the second shaft portion relative to the first shaft portion.

In an embodiment of the above, a tie shaft is concentric with and located radially inboard of the outer shaft assembly. The tie shaft is configured to apply an axially compressive load on the outer shaft assembly

In an embodiment according to any of the previous embodiments, a nut is applied to the tie shaft to apply the compressive load.

In an embodiment according to any of the previous embodiments, application of the nut to the tie shaft applies a tensile load to the tie shaft.

In an embodiment according to any of the previous embodiments, the tie shaft is continuous and unbroken along an axial length of the outer shaft assembly.

In an embodiment according to any of the previous embodiments, the centering feature includes an outer diameter lip of the first shaft portion that axially overlaps the second shaft portion.

In an embodiment according to any of the previous embodiments, the centering feature includes an inner diameter lip of the first shaft portion that axially overlaps the second shaft portion.

In an embodiment according to any of the previous embodiments, the spool is a high pressure spool of a two-spool gas turbine engine.

In an embodiment according to any of the previous embodiments, the compressor is an impeller.

In yet another aspect of the present invention, a spool of a gas turbine engine includes an outer shaft assembly located at and configured to rotate about an engine central longitudinal axis. The outer shaft assembly is secured to one or more rotating components of the gas turbine engine. The outer shaft assembly includes a first shaft portion and a second shaft portion. The first shaft portion axially overlaps the second shaft portion at a shaft joint. A centering feature is positioned at the shaft joint and is configured to radially center the second shaft portion relative to the first shaft portion. A tie shaft is concentric with and is located radially inboard of the outer shaft assembly. The tie shaft is configured to apply an axially compressive load on the outer shaft assembly. A method of testing the spool includes configuring the tie shaft to accept a pyrotechnic charge, detonating the pyrotechnic charge thus separating the tie shaft, releasing the compressive load on the outer shaft assembly via detonating the pyrotechnic charge, and uncoupling the first shaft portion from the second shaft portion via the release of the compressive load.

In an embodiment of the above, the spool is rotated at a preselected speed prior to detonating the pyrotechnic charge.

In an embodiment according to any of the previous embodiments, the pyrotechnic charge is placed at a same axial location as the shaft joint.

In an embodiment according to any of the previous embodiments, the pyrotechnic charge is placed at a radially inner surface of the tie shaft.

### BRIEF DESCRIPTION OF THE DRAWINGS

The following descriptions should not be considered limiting in any way. With reference to the accompanying drawings, like elements are numbered alike:
FIG. 1 is a partial cross-sectional view of an embodiment of a gas turbine engine;
FIG. 2 is a partial cross-sectional view of an embodiment of a shaft joint of a gas turbine engine;
FIG. 3 is a partial cross-sectional view of another embodiment of a shaft joint of a gas turbine engine; and
FIG. 4 is a partial cross-sectional view of yet another embodiment of a shaft joint of a gas turbine engine;

### DETAILED DESCRIPTION

A detailed description of one or more embodiments of the disclosed apparatus and method are presented herein by way of exemplification and not limitation with reference to the Figures.

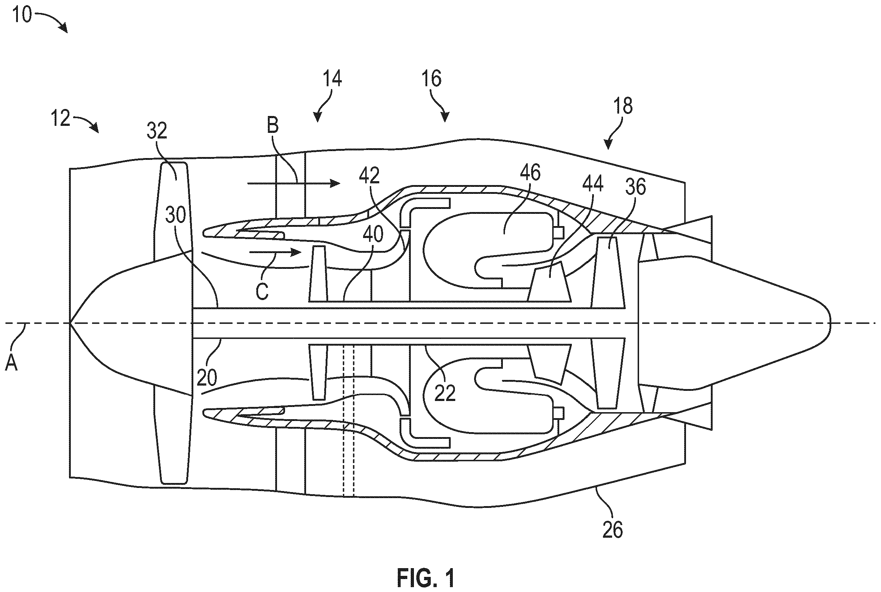

FIG. 1 schematically illustrates a gas turbine engine 10. The gas turbine engine 10 is disclosed herein as a two-spool turbofan that generally incorporates a fan section 12, a compressor section 14, a combustor section 16 and a turbine section 18. Alternative engines might include other systems or features. The fan section 12 drives air along a bypass flow path B in a bypass duct, while the compressor section 14 drives air along a core flow path C for compression and communication into the combustor section 16 then expansion through the turbine section 18. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 10 generally includes a low speed spool 20 and a high speed spool 22 mounted for rotation about an engine central longitudinal axis A relative to an engine static structure 26.

The low speed spool 20 generally includes an inner shaft 30 that interconnects a fan 32, and a low pressure turbine 36. The high speed spool 22 includes an outer shaft 40 that interconnects an impeller 42 and high pressure turbine 44. A combustor 46 is arranged in exemplary gas turbine 10 between the impeller 42 and the high pressure turbine 44. An engine static structure 36 is arranged generally between the high pressure turbine 44 and the low pressure turbine 36. The inner shaft 30 and the outer shaft 40 are concentric and rotate about the engine central longitudinal axis A which is collinear with their longitudinal axes.

The core airflow is compressed by the impeller 42, mixed and burned with fuel in the combustor 46, then expanded over the high pressure turbine 44 and low pressure turbine 36. The turbines 36, 44 rotationally drive the respective low speed spool 20 and high speed spool 22 in response to the expansion. It will be appreciated that each of the positions of the fan section 12, compressor section 14, combustor section 16, and turbine section 18, may be varied.

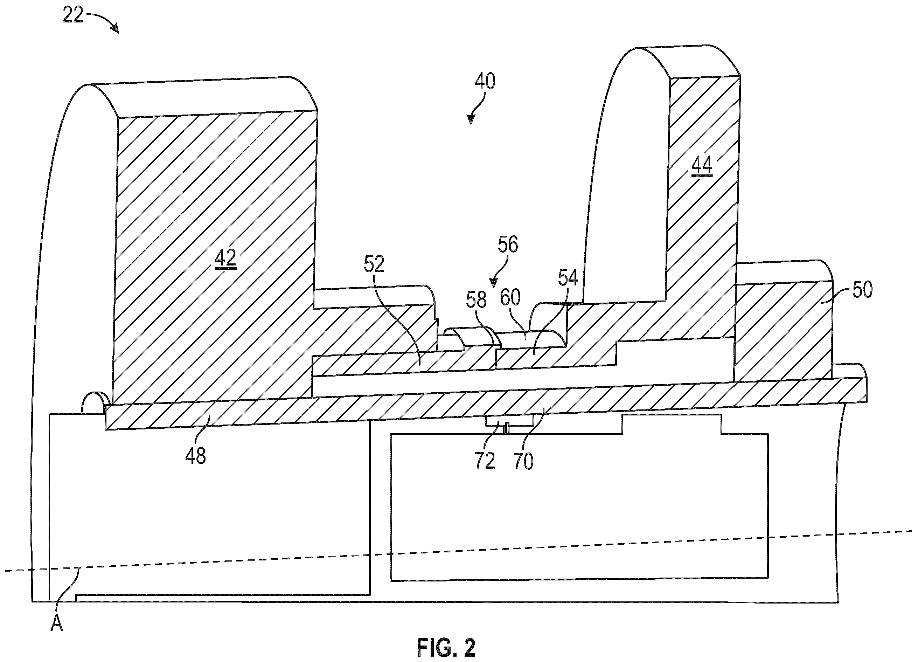

Referring now to FIG. 2, the gas turbine engine 10 has a requirement to be tested for containment performance in the event of decoupling or separation of the high speed spool 22. As previously stated, the high speed spool 22 includes the impeller 42 and high pressure turbine 44, disposed along outer shaft 40, which is concentric with a tie shaft 48 disposed radially inboard of the outer shaft 40. The impeller 42 and the high pressure turbine 44 are axially retained along the tie shaft 48 via a nut 50 located at the high pressure turbine 44, which when tightened puts a compressive load on the outer shaft 40 between the impeller 42 and the high pressure turbine 44. Meanwhile, tightening of the nut 50 puts a tensile load on the tie shaft 48.

The outer shaft 40 is a two-piece construction, and has a first shaft portion 52 extending axially rearwardly from the impeller 42 toward the high pressure turbine 44, and has a second shaft portion 54 extending axially forwardly from the high pressure turbine 44 toward the impeller 42. The first shaft portion 52 is joined to the second shaft portion 54 at a shaft joint 56, which in some embodiments is located at a midpoint between the impeller 42 and the high pressure turbine 44. One or more centering features are included at the shaft joint 56. In the embodiment of FIG. 2, the centering features include an outer diameter lip 58 of the first shaft portion 52 that axially overlaps a radially outer surface 60 of the second shaft portion 54. This centers the second shaft portion 54 and the high pressure turbine 44 relative to the first shaft portion 52 and the impeller 42, while also providing sufficient resistance to bending and vibratory loads at the shaft joint 56.

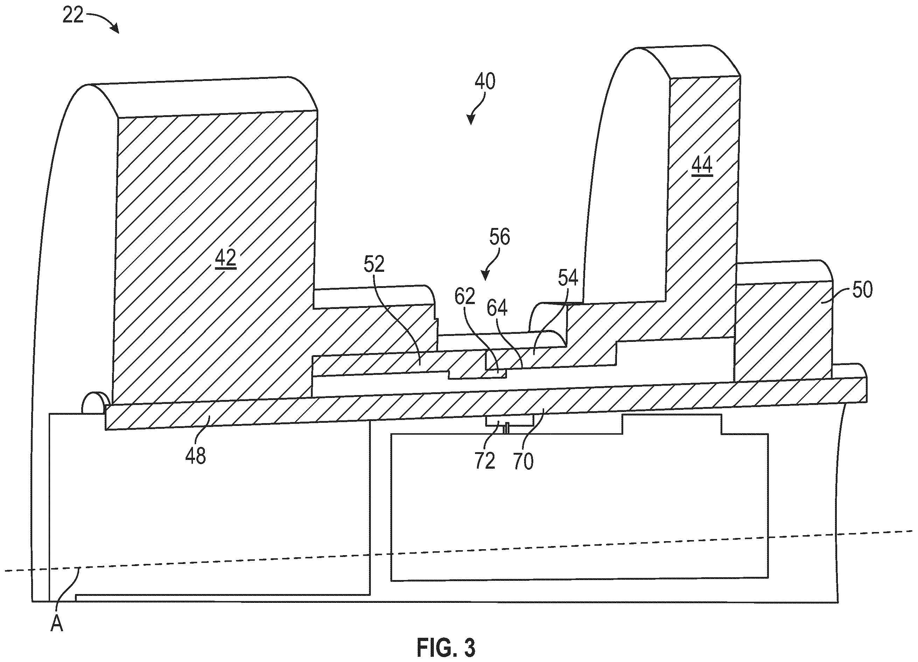

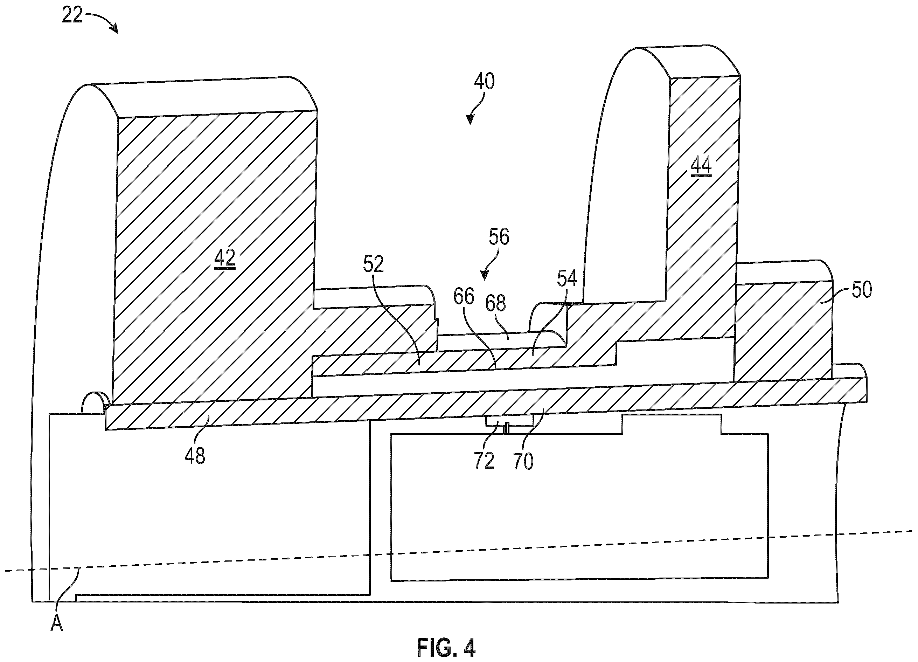

While the outer diameter lip 58 is utilized in the embodiment of FIG. 2, in other embodiments the centering feature may take other forms. In FIG. 3, for example, the centering features include an inner diameter lip 62 at the first shaft portion 52 that axially overlaps a radially inner surface 64 of the second shaft portion 54. Further, while the outer diameter lip 58 and the inner diameter lip 62 are illustrated herein as portions of the first shaft portion 52, one skilled in the art will readily appreciate that the outer diameter lip 58 and the inner diameter lip 62 may similarly be portions of the second shaft portion 54 that axially overlap the first shaft portion 52. In other embodiments, such as shown in FIG. 4, the first shaft portion 52 may include a conical first end surface 66 that mates to a complimentary conical second end surface 68 of the second shaft portion 54. The conical first end surface 66 and the conical second end surface 68 may include a face spline or curvic coupling to connect the first shaft portion 52 and the second shaft portion 54, while still allowing for decoupling.

Referring again to FIG. 2, the configurations of the outer shaft 40 disclosed herein reduce axial resistance to tension, and reduces resistance to bending and vibratory loads, while still providing for centering of the first shaft portion 52 relative to the second shaft portion 54. Additionally, for testing purposes, the tie shaft 48 includes modifications, such as an inner surface pocket 70, to accept a pyrotechnic charge 72, which is only present for testing of decoupling.

To execute such as test, the pyrotechnic charge 72 is placed at the inner surface pocket 70, which in some embodiments is located at a same axial location of the shaft joint 56. In some embodiments, the test may be performed with a static outer shaft 40, while in other embodiments the gas turbine engine 10 is operated so that the outer shaft 40 rotates about the engine central longitudinal axis A at a preselected rotational speed. Activation or detonation of the pyrotechnic charge separates the tie shaft 48 and and removes the compressive load from the outer shaft 40, resulting in decoupling of the shaft joint 56.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A spool (22) of a gas turbine engine (10), comprising:
an outer shaft assembly (40) disposed at and configured to rotate about an engine central longitudinal axis (A), the outer shaft assembly (40) secured to one or more rotating components of the gas turbine engine (10), the outer shaft assembly (40) including:
a first shaft portion (52);
a second shaft portion (54), the first shaft portion (52) axially overlapping the second shaft portion (54) at a shaft joint (56); and
a centering feature disposed at the shaft joint (56) configured to radially center the second shaft portion (54) relative to the first shaft portion (52); and
a tie shaft (48) concentric with and radially inboard of the outer shaft assembly (40), the tie shaft (48) configured to apply an axially compressive load on the outer shaft assembly (40).

2. The spool (22) of claim 1, further comprising a nut (50) applied to the tie shaft (48) to apply the compressive load.

3. The spool (22) of claim 1 or 2, wherein the centering feature includes an outer diameter lip (58) of the first shaft portion (52) that axially overlaps the second shaft portion (54).

4. The spool (22) of any preceding claim, wherein the centering feature includes an inner diameter lip (62) of the first shaft portion (52) that axially overlaps the second shaft portion (54).

5. The spool (22) of any preceding claim, wherein the spool (22) is a high pressure spool of a two-spool gas turbine engine (10).

6. The spool (22) of any preceding claim, wherein the spool (22) includes:
an impeller (42); and
a turbine (44), wherein the impeller (42) is disposed at the first shaft portion (52) and the turbine (44) is disposed at the second shaft portion (54).

7. The spool (22) of any preceding claim, wherein the tie shaft (48) is continuous and unbroken along an axial length of the outer shaft assembly (40).

8. A gas turbine engine (10), comprising:
a combustor (46); and
at least one spool (22), the at least one spool (22) including:
a turbine (36, 34) configured to be driven by products of the combustor (46);
a compressor (14) operably connected to and driven by rotation of the turbine (36, 34); and
an outer shaft assembly (40) including:
a first shaft portion (52) connected to the compressor (14);
a second shaft portion (54) connected to the turbine (36, 34), the first shaft portion (52) axially overlapping the second shaft portion (54) at a shaft joint (56); and
a centering feature disposed at the shaft joint (56) configured to radially center the second shaft portion (54) relative to the first shaft portion (52).

9. The gas turbine engine (10) of claim 8, further comprising a tie shaft (48) concentric with and radially inboard of the outer shaft assembly (40), the tie shaft (48) configured to apply an axially compressive load on the outer shaft assembly (40), optionally wherein the tie shaft (48) is continuous and unbroken along an axial length of the outer shaft assembly (40).

10. The gas turbine engine (10) of claim 9, further comprising a nut (50) applied to the tie shaft (48) to apply the compressive load, optionally wherein application of the nut (50) to the tie shaft (48) applies a tensile load to the tie shaft (48).

11. The gas turbine engine (10) of any of claims 8 to 10, wherein:
the centering feature includes an outer diameter lip (58) of the first shaft portion (52) that axially overlaps the second shaft portion (54); and/or
the centering feature includes an inner diameter lip (62) of the first shaft portion (52) that axially overlaps the second shaft portion (54).

12. The gas turbine engine (10) of any of claims 8 to 11, wherein:
the spool (22) is a high pressure spool of a two-spool gas turbine engine (10); and/or
the compressor is an impeller (42).

13. A method of testing a spool (22) of a gas turbine engine (10), the spool (22) including:
an outer shaft assembly (40) disposed at and configured to rotate about an engine central longitudinal axis (A), the outer shaft assembly (40) secured to one or more rotating components of the gas turbine engine (10), the outer shaft assembly (40) including:
a first shaft portion (52);
a second shaft portion (54), the first shaft portion (52) axially overlapping the second shaft portion (54) at a shaft joint (56); and
a centering feature disposed at the shaft joint (56) configured to radially center the second shaft portion (54) relative to the first shaft portion (52); and
a tie shaft (48) concentric with and radially inboard of the outer shaft assembly (40), the tie shaft (48) configured to apply an axially compressive load on the outer shaft assembly (40), the method including:
configuring the tie shaft (48) to accept a pyrotechnic charge (72);
detonating the pyrotechnic charge (72) thus separating the tie shaft (48);
releasing the compressive load on the outer shaft assembly (40) via detonating the pyrotechnic charge (72); and
uncoupling the first shaft portion (52) from the second shaft portion (54) via the release of the compressive load.

14. The method of claim 13, further comprising rotating the spool (22) at a preselected speed prior to detonating the pyrotechnic charge (72).

15. The method of claim 13 or 14, further comprising:
placing the pyrotechnic charge (72) at a same axial location as the shaft joint (56); and/or
placing the pyrotechnic charge (72) at a radially inner surface (64) of the tie shaft (48).
